# EUROPEAN PATENT APPLICATION

(11) **EP 4 664 349 A1**
(43) Date of publication of application: **17.12.2025**
(21) Application number: 25180365.6
(22) Date of filing: 03.06.2025
(51) Int. Cl.: G06F 40/30, G06F 40/56, G06N 3/0475, G06T 11/00

(54) **GENERATIVE CONTAINERS**

(30) Priority: 11.06.2024 US 202418740084
(71) Applicant: Microsoft Technology Licensing, LLC, Redmond, WA 98052 (US)
(72) Inventor: PAHUD, Michel, Redmond, 98052 (US); MARQUARDT, Nicolai, Redmond, 98052 (US); RICHE, Nathalie M., Redmond, 98052 (US); HINCKLEY, Kenneth P., Redmond, 98052 (US); ROMAT, Hugo, Redmond, 98052 (US); BROWN, David William, Redmond, 98052 (US)
(74) Representative: CMS Cameron McKenna Nabarro Olswang LLP

(57) **Abstract**

This document relates to generative machine learning. Users can provide a selected content item, such as an image, video, or text. Then, generative content items can be generated based on the selected content item and presented in generative containers on a graphical user interface. Users can iteratively refine the generated content items by selecting generated content items from the user interface and requesting refinements to the selected content items. Based on the requested refinements, a new set of generated content items can be generated and displayed to the user. The iterative refinement process can continue until the user decides to end the process, e.g., by accepting a final generated content item.

## Description

### BACKGROUND

In recent years, generative machine learning models have demonstrated tremendous capability at generating content. For instance, generative language models can generate text to summarize existing documents, help users draft new documents, and conduct natural language conversations with users at a very high level. As another example, generative image models can generate realistic and/or aesthetically-pleasing images from language prompts, and they can also modify existing images by restyling them and/or adding objects. However, generative machine learning models face certain obstacles to widespread adoption.

### SUMMARY

This Summary is provided to introduce a selection of concepts in a simplified form. These concepts are further described below in the Detailed Description. This Summary is not intended to identify key features or essential features of the claimed subject matter, nor is it intended to be used to limit the scope of the claimed subject matter.

The description generally relates to techniques for employing generative models to generate content for a user. One example includes a computer-implemented method that can include receiving a user-identified content item, based on the user-identified content item, generating first content items using one or more generative models. The computer-implemented method can also include presenting the first content items in one or more first generative containers. The computer-implemented method can also include receiving a user selection of a selected first content item from a selected first generative container. The computer-implemented method can also include receiving a requested refinement to the selected first content item, based on the selected first content item and the requested refinement, generating second content items using the one or more generative models. The computer-implemented method can also include presenting the second content items in one or more second generative containers.

Another example entails a system that includes a processor and a storage medium storing instructions. When executed by the processor, the instructions can cause the system to receive a user-identified content item, based on the user-identified content item, generate first content items using one or more generative models. The storage medium storing instructions can also cause the system to present the first content items in one or more first generative containers. The storage medium storing instructions can also cause the system to receive a user selection of a selected first content item from a selected first generative container. The storage medium storing instructions can also cause the system to receive a requested refinement to the selected first content item, based on the selected first content item and the requested refinement, generate second content items using the one or more generative models. The storage medium storing instructions can also cause the system to present the second content items in one or more second generative containers.

Another example includes a computer-readable storage medium storing executable instructions which, when executed by a processor, cause the processor to perform acts. The acts can include receiving a user-identified content item, based on the user-identified content item, generating first content items using one or more generative models. The storage medium storing instructions can also cause the system to present the first content items in one or more first generative containers. The storage medium storing instructions can also cause the system to receive a user selection of a selected first content item from a selected first generative container. The storage medium storing instructions can also cause the system to receive a requested refinement to the selected first content item, based on the selected first content item and the requested refinement. The storage medium storing instructions can also cause the system to generate second content items using the one or more generative models. The storage medium storing instructions can also cause the system to present the second content items in one or more second generative containers.

The above-listed examples are intended to provide a quick reference to aid the reader and are not intended to define the scope of the concepts described herein.

### BRIEF DESCRIPTION OF THE DRAWINGS

The Detailed Description is described with reference to the accompanying figures. In the figures, the left-most digit(s) of a reference number identifies the figure in which the reference number first appears. The use of similar reference numbers in different instances in the description and the figures may indicate similar or identical items.
FIG. 1 illustrates an example generative language model, consistent with some implementations of the present concepts.
FIG. 2 illustrates an example generative image model, consistent with some implementations of the present concepts.
FIGS. 3A, 3D, 4A, 4B, 4D, 5A, and 5B illustrate example graphical user interfaces, consistent with some implementations of the disclosed techniques.
FIGS. 3B, 3C, 4C, 4E, and 5C illustrate example prompts and responses relating to a generative model, consistent with some implementations of the disclosed techniques.
FIG. 6 illustrates an example data structure that can also be employed as a basis for a graphical user interface, consistent with some implementations of the disclosed techniques.
FIG. 7 illustrates an example of a method for providing a user experience involving generative containers, consistent with some implementations of the present concepts.
FIG. 8 illustrates an example of a system in which the disclosed implementations can be performed, consistent with some implementations of the disclosed techniques.

### DETAILED DESCRIPTION

### OVERVIEW

As noted above, generative machine learning models offer tremendous capabilities for generation of content, such as images and text. However, there are very few automated techniques for enabling user input to a generative machine learning model. Instead, user input to a generative machine learning model can involve manually drafting one or more prompts that are then input directly to the generative machine learning model.

Furthermore, graphical user interfaces for generative machine learning tend to be rudimentary. For instance, a graphical user interface might be organized temporally, e.g., with prompts followed by responses in the order that they were processed by the model. Modifying a previous prompt from earlier in a generative machine learning session might involve scrolling upward in a web browser window until that prompt is found, then copying and manually revising that prompt.

The disclosed implementations offer techniques for providing a graphical user interface that facilitates an iterative process for generating content using generative machine learning models. At each iteration, the newly-generated content is presented to the user in one or more generative containers. The user can then choose a selected content item from one of the generative containers as a basis for a subsequent iteration of content generation. Through each iteration, prompts used to generate the selected content item in the previous iteration are refined based on additional user input requesting modifications to the selected content item. The process of generating content items, presenting them in generative containers, and refining them based on user input can continue until the user accepts a final generated content item.

### MACHINE LEARNING OVERVIEW

There are various types of machine learning frameworks that can be trained to perform a given task. Support vector machines, decision trees, and neural networks are just a few examples of machine learning frameworks that have been used in a wide variety of applications, such as image processing, computer vision, and natural language processing. Some machine learning frameworks, such as neural networks, use layers of nodes that perform specific operations.

In a neural network, nodes are connected to one another via one or more edges. A neural network can include an input layer, an output layer, and one or more intermediate layers. Individual nodes can process their respective inputs according to a predefined function, and provide an output to a subsequent layer, or, in some cases, a previous layer. The inputs to a given node can be multiplied by a corresponding weight value for an edge between the input and the node. In addition, nodes can have individual bias values that are also used to produce outputs. Various training procedures can be applied to learn the edge weights and/or bias values. The term "parameters" when used without a modifier is used herein to refer to learnable values such as edge weights and bias values that can be learned by training a machine learning model, such as a neural network.

A neural network structure can have different layers that perform different specific functions. For example, one or more layers of nodes can collectively perform a specific operation, such as pooling, encoding, or convolution operations. For the purposes of this document, the term "layer" refers to a group of nodes that share inputs and outputs, e.g., to or from external sources or other layers in the network. The term "operation" refers to a function that can be performed by one or more layers of nodes. The term "model structure" refers to an overall architecture of a layered model, including the number of layers, the connectivity of the layers, and the type of operations performed by individual layers. The term "neural network structure" refers to the model structure of a neural network. The term "trained model" and/or "tuned model" refers to a model structure together with parameters for the model structure that have been trained or tuned. Note that two trained models can share the same model structure and yet have different values for the parameters, e.g., if the two models are trained on different training data or if there are underlying stochastic processes in the training process.

There are many machine learning tasks for which there is a relative lack of training data. One broad approach to training a model with limited task-specific training data for a particular task involves "transfer learning." In transfer learning, a model is first pretrained on another task for which significant training data is available, and then the model is tuned to the particular task using the task-specific training data.

The term "pretraining," as used herein, refers to model training on a set of pretraining data to adjust model parameters in a manner that allows for subsequent tuning of those model parameters to adapt the model for one or more specific tasks. In some cases, the pretraining can involve a self-supervised learning process on unlabeled pretraining data, where a "self-supervised" learning process involves learning from the structure of pretraining examples, potentially in the absence of explicit (e.g., manually-provided) labels. Subsequent modification of model parameters obtained by pretraining is referred to herein as "tuning." Tuning can be performed for one or more tasks using supervised learning from explicitly-labeled training data, in some cases using a different task for tuning than for pretraining.

### TERMINOLOGY

The term "generative model," as used herein, refers to a machine learning model employed to generate new content. One type of generative model is a "generative language model," which is a model that can generate new sequences of text given some input. One type of input for a generative language model is a natural language prompt, e.g., a query potentially with some additional context. For instance, a generative language model can be implemented as a neural network, e.g., a long short-term memory-based model, a decoder-based generative language model, etc. Examples of decoder-based generative language models include versions of models such as GPT, BLOOM, PaLM, Mistral, Gemini, and/or LLaMA. Generative language models can be trained to predict tokens in sequences of textual training data. When employed in inference mode, the output of a generative language model can include new sequences of text that the model generates.

Another type of generative model is a "generative image model," which is a model that generates images or video. For instance, a generative image model can be implemented as a neural network, e.g., a generative image model such as one or more versions of Stable Diffusion, DALL-E, Sora, or GENIE. A generative image model can generate new image or video content using inputs such as a natural language prompt and/or an input image or video. One type of generative image model is a diffusion model, which can add noise to training images and then be trained to remove the added noise to recover the original training images. In inference mode, a diffusion model can generate new images by starting with a noisy image and removing the noise. Note also that generative image models can generate videos, and the term "image" also encompasses two-dimensional and three-dimensional video.

In some cases, a generative model can be multi-modal. For instance, a model may be capable of using various combinations of text, images, video, audio, application states, code, or other modalities as inputs and/or generating combinations of text, images, video, audio, application states, or code or other modalities as outputs. Here, the term "generative language model" encompasses multi-modal generative models where at least one mode of output includes natural language tokens. Likewise, the term "generative image model" encompasses multi-modal generative models where at least one mode of output includes images or video. Examples of multi-modal models include certain GPT variants such as GPT-4o, variants of Gemini, etc. Multi-modal models can also include lightweight models such as Phi-3-Vision-128K-Instruct.

The term "prompt," as used herein, refers to input provided to a generative model that the generative model uses to generate outputs. A prompt can be provided in various modalities, such as text, an image, audio, video, etc. The term "language generation prompt" refers to a prompt to a generative model where the requested output is in the form of natural language. The term "image generation prompt" refers to a prompt to a generative model where the requested output is in the form of an image.

The term "generated content item," as used herein, refers to output generated by a generative model, e.g., in response to a prompt. When content items are generated, they can be presented to a user in a "generative container." As used herein, the term "generative container" refers to a distinct area of a graphical user interface where generated content items are presented to a user. For instance, different generative containers can include different groups of generated content items. As described more below, the generative content items in a generative container can share some characteristics.

The term "machine learning model" refers to any of a broad range of models that can learn to generate automated user input and/or application output by observing properties of past interactions between users and applications. For instance, a machine learning model could be a neural network, a support vector machine, a decision tree, a clustering algorithm, etc. In some cases, a machine learning model can be trained using labeled training data, a reward function, or other mechanisms, and in other cases, a machine learning model can learn by analyzing data without explicit labels or rewards.

### EXAMPLE DECODER-BASED GENERATIVE LANGUAGE MODEL

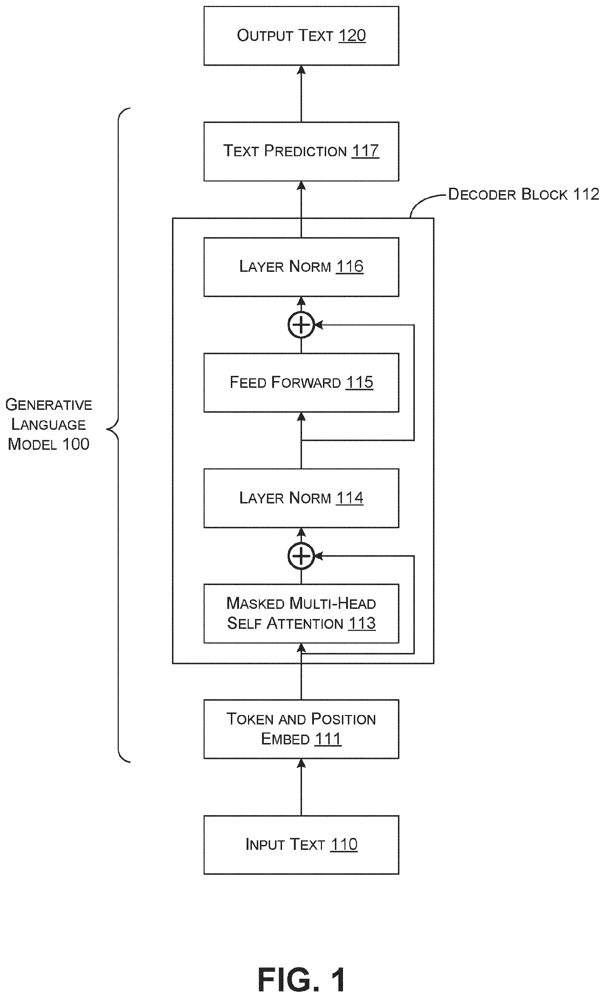

FIG. 1 illustrates an exemplary generative language model 100 (e.g., a transformer-based decoder) that can be employed using the disclosed implementations. Generative language model 100 is an example of a machine learning model that can be used to perform one or more natural language processing tasks that involve generating text, as discussed more below. For the purposes of this document, the term "natural language" means language that is normally used by human beings for writing or conversation.

Generative language model 100 can receive input text 110, e.g., a prompt from a user or a prompt generated automatically by machine learning using the disclosed techniques. For instance, the input text can include words, sentences, phrases, or other representations of language. The input text can be broken into tokens and mapped to token and position embeddings 111 representing the input text. Token embeddings can be represented in a vector space where semantically-similar and/or syntactically-similar embeddings are relatively close to one another, and less semantically-similar or less syntactically-similar tokens are relatively further apart. Position embeddings represent the location of each token in order relative to the other tokens from the input text.

The token and position embeddings 111 are processed in one or more decoder blocks 112. Each decoder block implements masked multi-head self-attention 113, which is a mechanism relating different positions of tokens within the input text to compute the similarities between those tokens. Each token embedding is represented as a weighted sum of other tokens in the input text. Attention is only applied for already-decoded values, and future values are masked. Layer normalization 114 normalizes features to mean values of 0 and variance to 1, resulting in smooth gradients. Feed forward layer 115 transforms these features into a representation suitable for the next iteration of decoding, after which another layer normalization 116 is applied. Multiple instances of decoder blocks can operate sequentially on input text, with each subsequent decoder block operating on the output of a preceding decoder block. After the final decoding block, text prediction layer 117 can predict the next word in the sequence, which is output as output text 120 in response to the input text 110 and also fed back into the language model. The output text can be a newly-generated response to the prompt provided as input text to the generative language model.

Generative language model 100 can be trained using techniques such as next-token prediction or masked language modeling on a large, diverse corpus of documents. For instance, the text prediction layer 117 can predict the next token in a given document, and parameters of the decoder block 112 and/or text prediction layer can be adjusted when the predicted token is incorrect. In some cases, a generative language model can be pretrained on a large corpus of documents (Radford, et al., "Improving language understanding by generative pre-training," 2018). Then, a pretrained generative language model can be tuned using a reinforcement learning technique such as reinforcement learning from human feedback ("RLHF").

### EXAMPLE GENERATIVE IMAGE MODEL

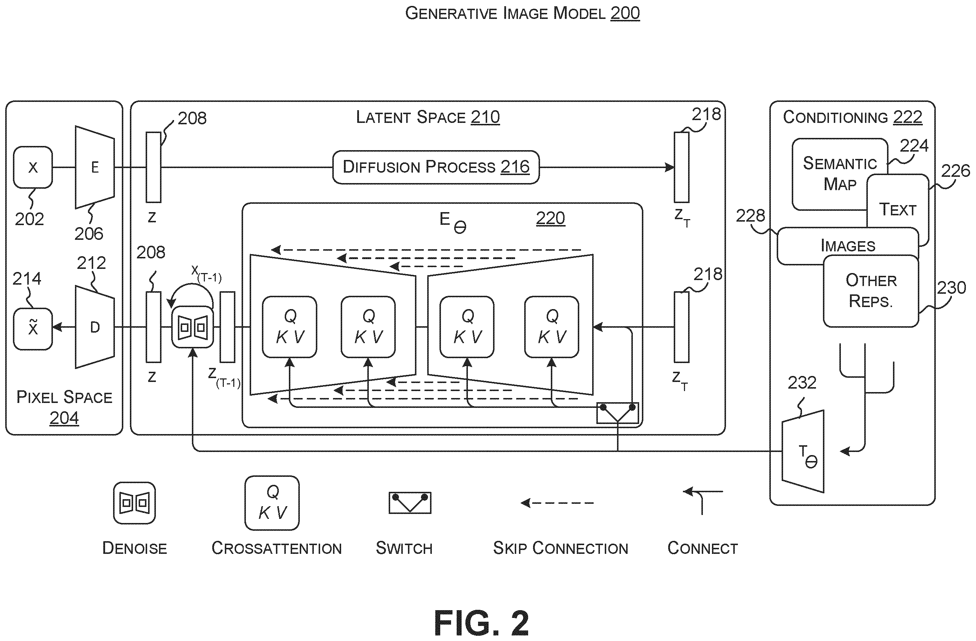

FIG. 2 illustrates an example generative image model 200. An image 202 (X) in pixel space 204 (e.g., red, green, blue) is encoded by an encoder 206 (E) into a representation 208 (Z) in a latent space 210. A decoder 212 (D) is trained to decode the latent representation Z to produce a reconstructed image 214 (X~) in the pixel space. For instance, the encoder can be trained (with the decoder) as a variational autoencoder using a reconstruction loss term with a regularization term.

In the latent space 210, a diffusion process 216 adds noise to obtain a noisy representation 218 (Z_{T}). A denoising component 220 (Ee) is trained to predict the noise in the compressed latent image Z_{T}. The denoising component can include a series of denoising autoencoders implemented using UNet 2D convolutional layers.

The denoising can involve conditioning 222 on other modalities, such as a semantic map 224, text 226, images 228, or other representations 230 which can be processed to obtain an encoded representation 232 (Te). For instance, text can be encoded using a text encoder (e.g., BERT, CLIP, etc.) to obtain the encoded representation. This encoded representation can be mapped to layers of the denoising component using cross-attention. The result is a text-conditioned latent diffusion model that can be employed to generate images conditioned on text inputs. To train a model such as CLIP, pairs of images and captions can be obtained from a dataset to encode both the images and captions, and the encoder can be trained to represent pairs of images and captions with similar embeddings.

Generative image model 200 can be employed for text to image generation, where an image is generated from a text prompt. Text prompts can be provided by users or generated automatically by machine learning using the disclosed techniques. In other cases, generative image model 200 can be employed for image-to-image mode, where an image is generated using an input image as well as a user or machine-generated text prompt. Generative image model 200 can also be employed for inpainting, where parts of an image are masked and remain fixed while the rest of the image is generated by the model, in some cases conditioned on a user or machine-generated text prompt.

In some cases, generative image model 200 can be implemented as a Stable Diffusion model (Rombach, et al., "High-Resolution Image Synthesis with Latent Diffusion Models," Proceedings of the IEEE/CVF Conference on Computer Vision and Pattern Recognition, 2022), which can be guided by a separate network, such as a ControlNet (Zhang, et al., "Adding Conditional Control to Text-to-Image Diffusion Models," Proceedings of the IEEE/CVF International Conference on Computer Vision, 2023). For instance, a ControlNet can guide the generative model to produce an image that preserves certain aspects of another image, e.g., the spatial layout and salient features of an image prior. A ControlNet can be implemented by locking the parameters of generative image model 200, cloning the model into another copy. The copy is connected to the original model with one or more zero convolutional layers which are then optimized with the parameters of the copy. For instance, the ControlNet can be trained to preserve edges, lines, boundaries, human poses, semantic segmentations, etc. from an image. A ControlNet can also be trained to preserve depth relationships of a user-identified image using a depth map obtained from the user-identified image, etc. The outputs of a ControlNet can be added to connections within the denoising layer. Thus, the generative image model can produce images that are conditioned not only on text, but also aspects of another image.

### GENERATIVE MODES

Generative image model 200 can implement a number of different modes. In a text-to-image mode, an image is generated from a given text prompt. In an image-to-image mode, an image is generated from a text prompt and an input image, and the generated image retains features of the input image while introducing new elements or styles consistent with the prompt. In inpainting/outpaintings mode, the processing is similar to the image-to-image mode, but an image mask is used to determine which parts of the image are fixed to match the input image. The rest of the image is generated in a way that it is consistent with the fixed parts of the image. Note that the term "inpainting," as used herein, includes filling in parts of a given image whereas "outpainting" refers to extending an image outward.

### EXAMPLE USER EXPERIENCE - INITIAL IMAGES

The following describes an example where generative language model 100 and generative image model 200 are employed together to generate image content items for a user. As described more below, the generative language model is employed to generate image generation prompts for the generative image model. The user is guided through a process where generated images are presented to the user in generative containers and the user can request refinements to selected images via a user interface. The refinements can be implemented by refining image generation prompts used to generate the selected images based on the refinements requested by the user.

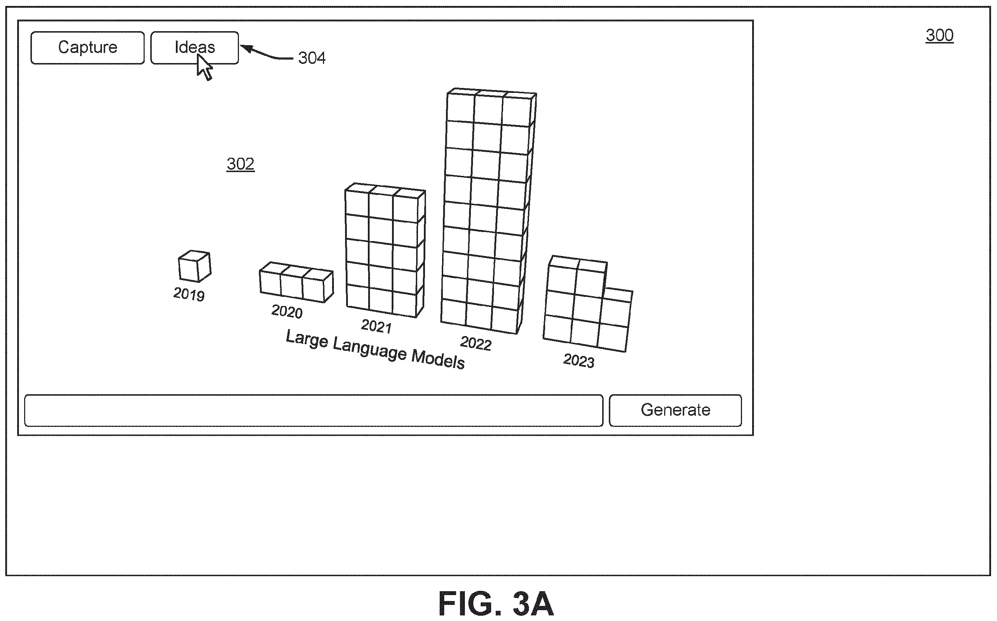

FIG. 3A shows a user interface 300 with a user-identified image 302. For instance, the user can designate user-identified image 302 by navigating via user input (e.g., via a file explorer). In this example, the user image includes stacks of blocks that represent the number of large language models that have been released in recent years. Further, assume that the user wishes to explore various ideas for alternative ways to express similar concepts to the user image using other images. For the purposes of the following example, assume that user-identified image 302 is associated with metadata, such as the title "Large Language Models" and an associated description "A histogram of Large Language Models released over recent years."

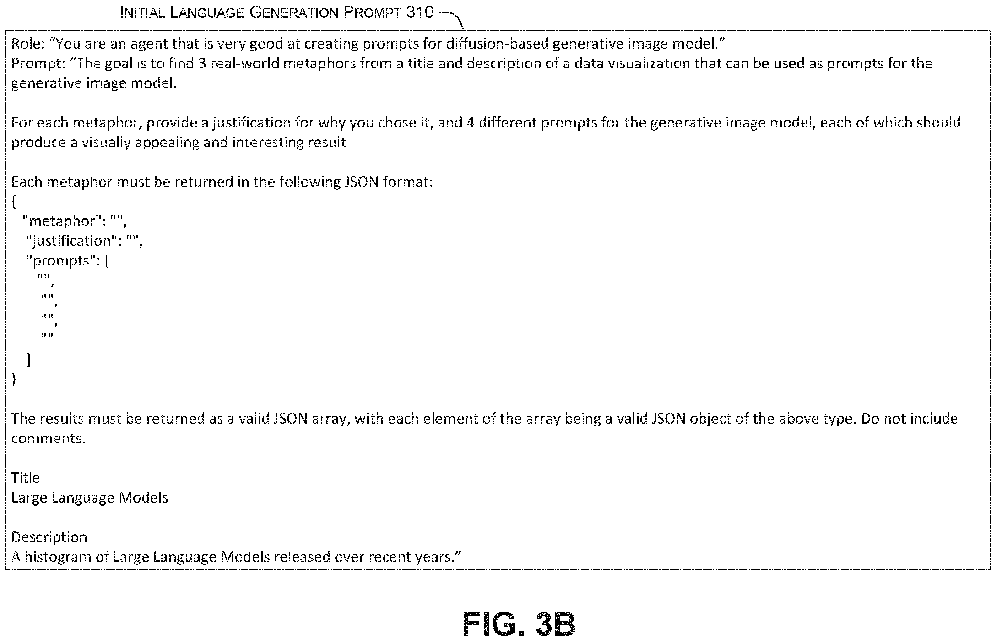

As shown in FIG. 3A, user interface 300 has an ideas icon 304. When selected, the ideas icon can trigger generation of metaphors to represent similar concepts as user-identified image 302. The metadata associated with the user image can be employed to generate the metaphors. For instance, FIG. 3B shows an initial language generation prompt 310 that can be input to generative language model 100 to request generation of metaphors and associated image generation prompts for the generative image model 200. Note that the language generation prompt includes both the title and the description associated with the user image.

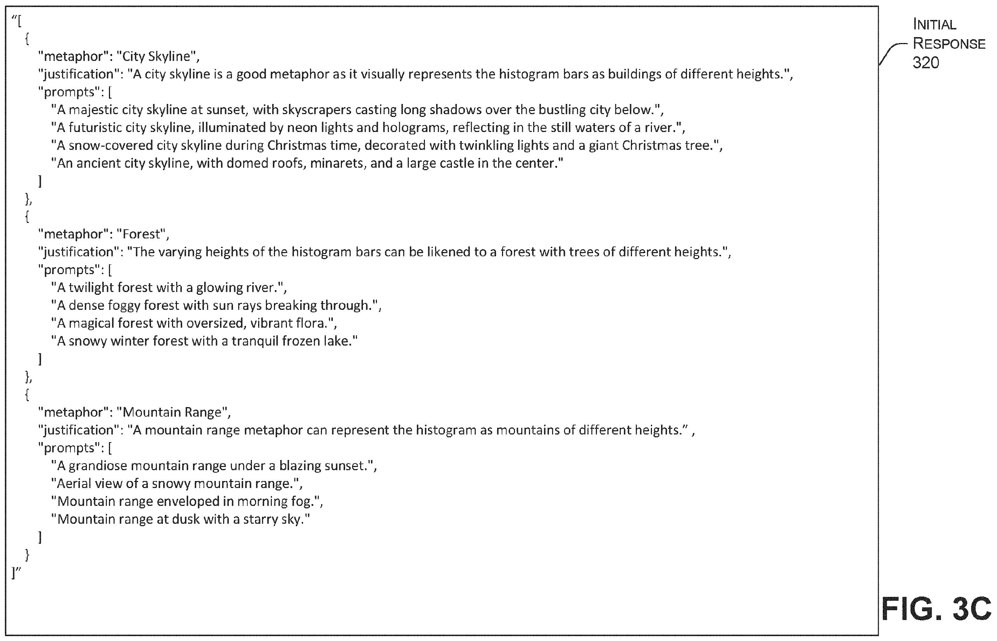

FIG. 3C shows an initial response 320 from generative language model 100 to the initial language generation prompt 310. The response suggests three metaphors to represent the concepts conveyed by user-identified image 302 - a city skyline, a forest, and a mountain range. The response also includes four image generation prompts for each metaphor.

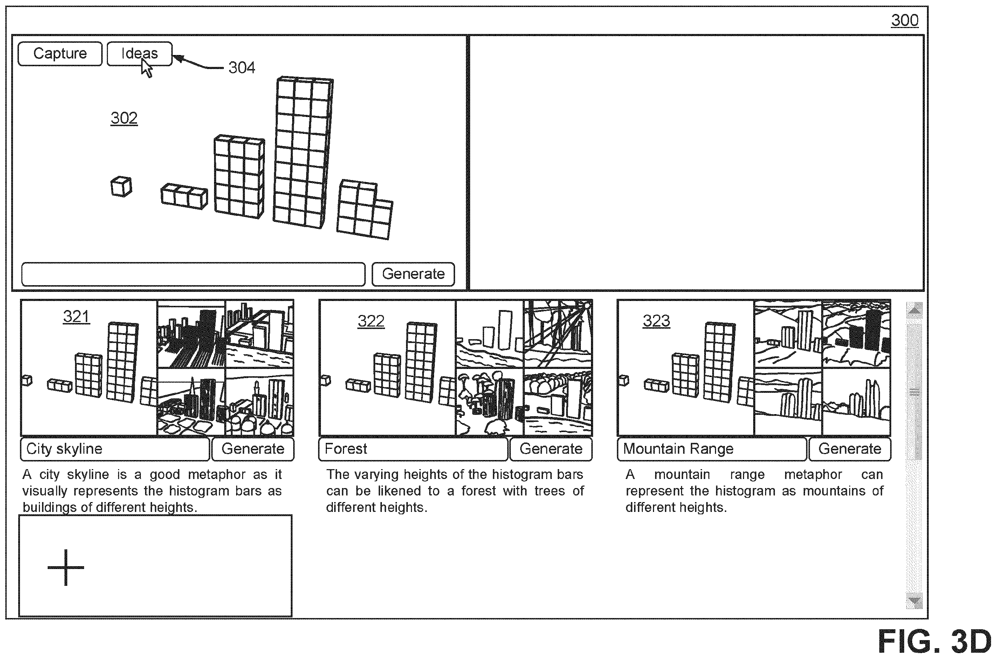

The image generation prompts can be input to generative image model 200 to generate images, which can then be output to the user. FIG. 3D shows user interface 300 with the generated images, where the images for each metaphor are presented in respective generative containers. Generative container 321 includes a first set of generated images based on the city skyline metaphor. Generative container 322 includes a second set of generated images based on the forest metaphor. Generative container 323 includes a third set of generated images based on the mountain range metaphor. Also, note that the justifications for each metaphor are presented adjacent to (below) the corresponding generative container for that metaphor.

Note that the generated images have a similar geometric structure to the user image. This can be accomplished by obtaining a depth map from the user-identified image 302, and then providing the depth map to the generative image model 200 as a constraint along with the respective image generation prompts. The depth map can be used for constraining the generative image model to maintain similar geometry to the original user image. For the following examples, assume that the depth map is provided to the generative image model at each iteration of image generation. In addition, note that the text below the blocks in user-identified image 302 is not duplicated in all figures due to space constraints, and the line drawings of the images do not necessarily convey all of the features in the image generation prompts.

### EXAMPLE USER EXPERIENCE - CITY SKYLINE BRANCH, FIRST ITERATION

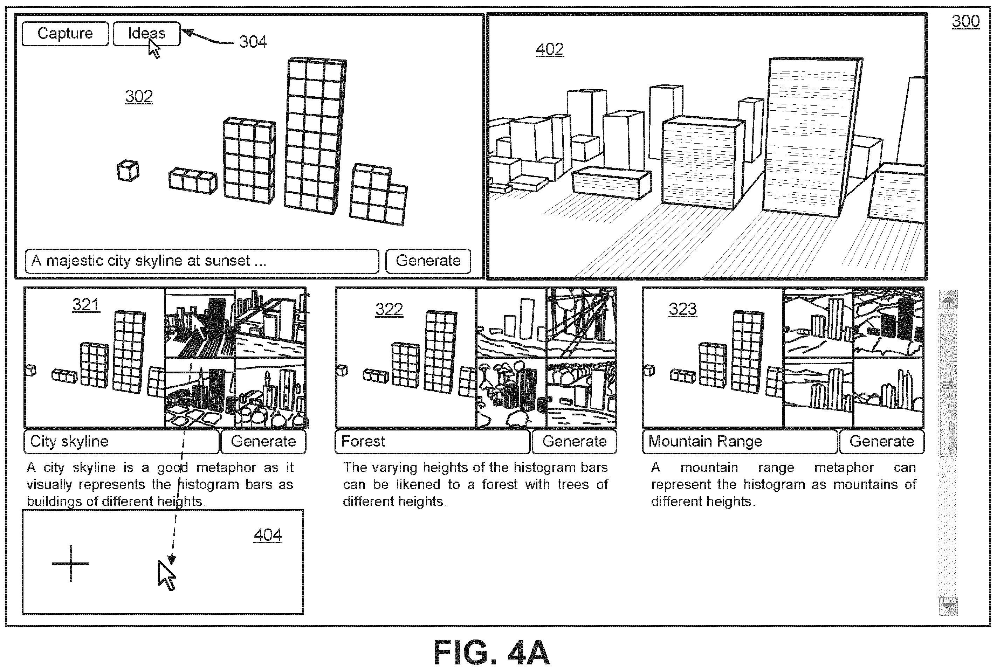

Next, assume the user decides they would like to further explore the city skyline metaphor represented by the set of images in generative container 321. As shown in FIG. 4A, the user can choose a selected image 402 from generative container 321 and drag the selected image to the new container area 404. When the user hovers over selected image 402, the selected image 402 is shown in the upper right portion of user interface 300, and the prompt used to generate that image is displayed on the user interface 300.

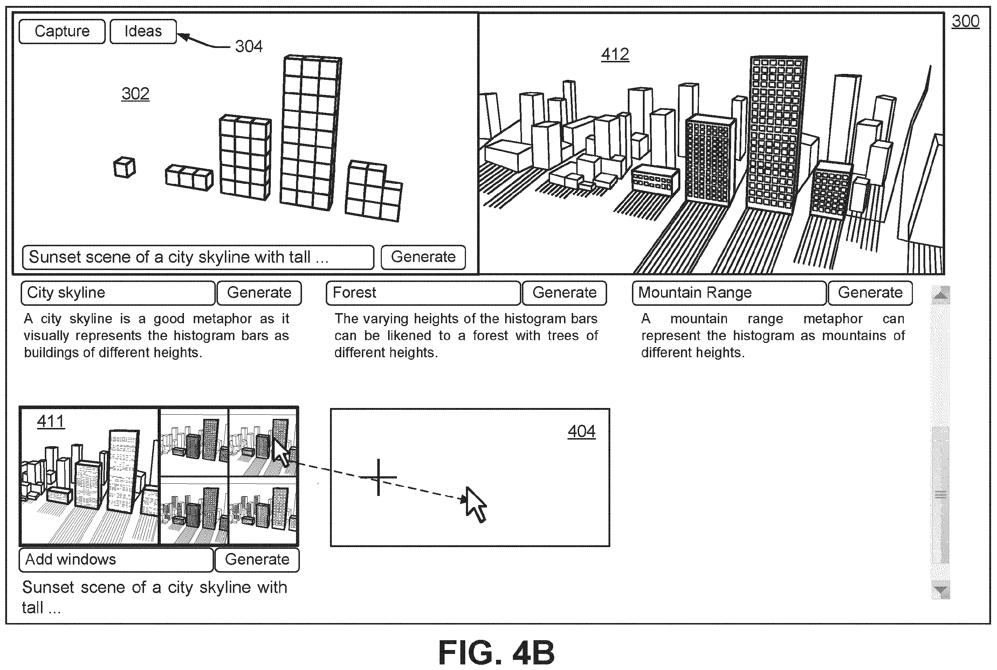

After the selected image is dragged to the new container area 404, a generative container 411 is created, as shown in FIG. 4B. Note that FIG. 4B shows the lower portion of user interface 300 scrolled down to reveal generative container 411, and the new container area is moved to a new location within the user interface. The user can enter the text "Add Windows" into the new generative container 411. This can trigger generation of new images based on the selected image 402 and the text input by the user. As shown in FIG. 4B, four new images are generated based on the city skyline metaphor and added to generative container 411, but now the images each include visible windows on some of the buildings.

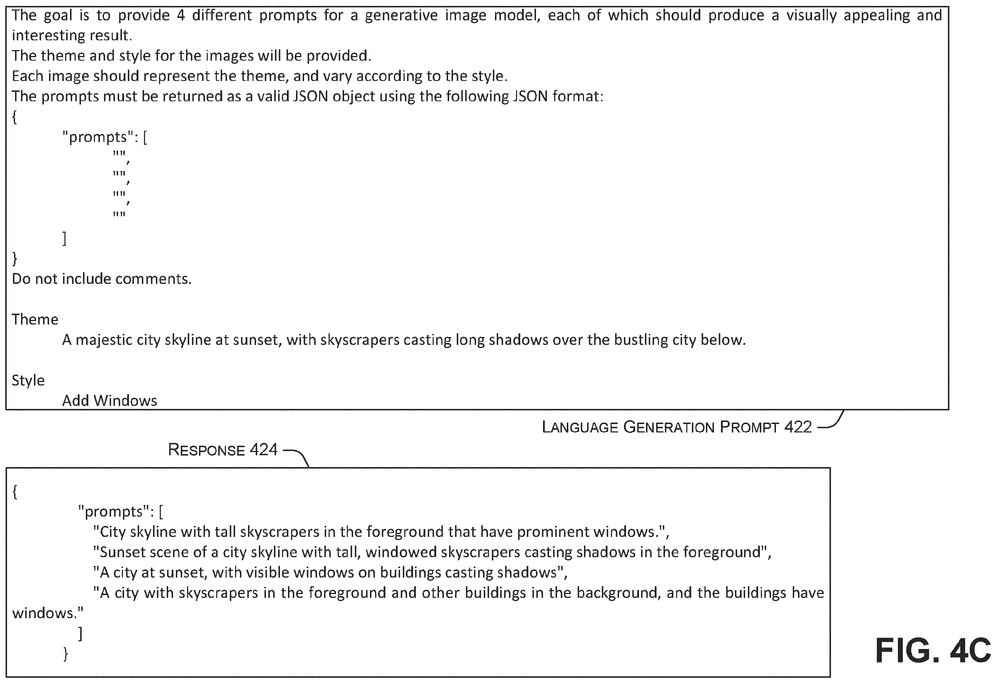

FIG. 4C shows a language generation prompt 422 that can be input to the generative language model 100. Language generation prompt 422 includes, as a theme, the image generation prompt that was used to generate selected image 402 - "A majestic city skyline at sunset, with skyscrapers casting long shadows over the bustling city below." The language generation prompt also includes a style obtained from the user input to generative container 411, "Add windows." Said another way, the language generation prompt requests refinement of the image generation prompt used to generate the selected image 402, based on the additional user input requesting to add the windows. The response 424 generated by the generative language model 100 includes four image generation prompts. These four image generation prompts can be input to generative image model 200, which then outputs the four new images shown in generative container 411.

### EXAMPLE USER EXPERIENCE - CITY SKYLINE BRANCH, SECOND ITERATION

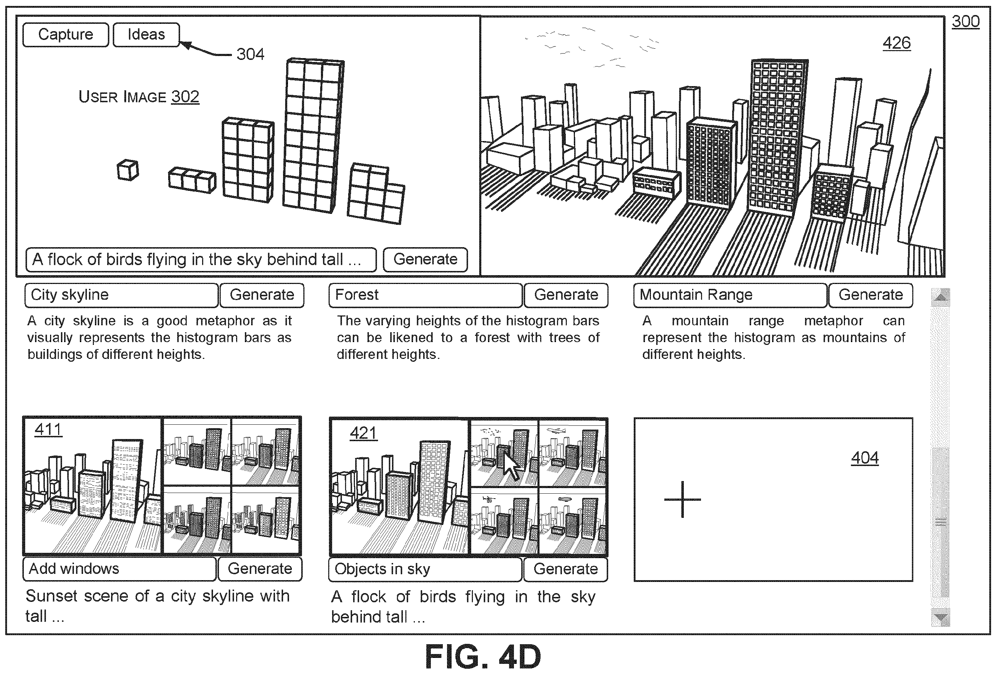

Next, assume the user would like to explore further refinements on one of the images from generative container 411. Referring back to FIG. 4B, the user performs another drag-and-drop of selected image 412 into new container area 404. After the selected image is dragged to the new container area, a generative container 421 is created, as shown in FIG. 4D. The user can enter the text "Objects in Sky" and request generation of new images based on the selected image 412 and the text. This can trigger generation of new images based on the selected image 412 and the text. As shown in FIG. 4D, four new images are generated based on the selected image and added to generative container 421, but now the images each include visible objects flying in the background, including birds flying in selected image 426.

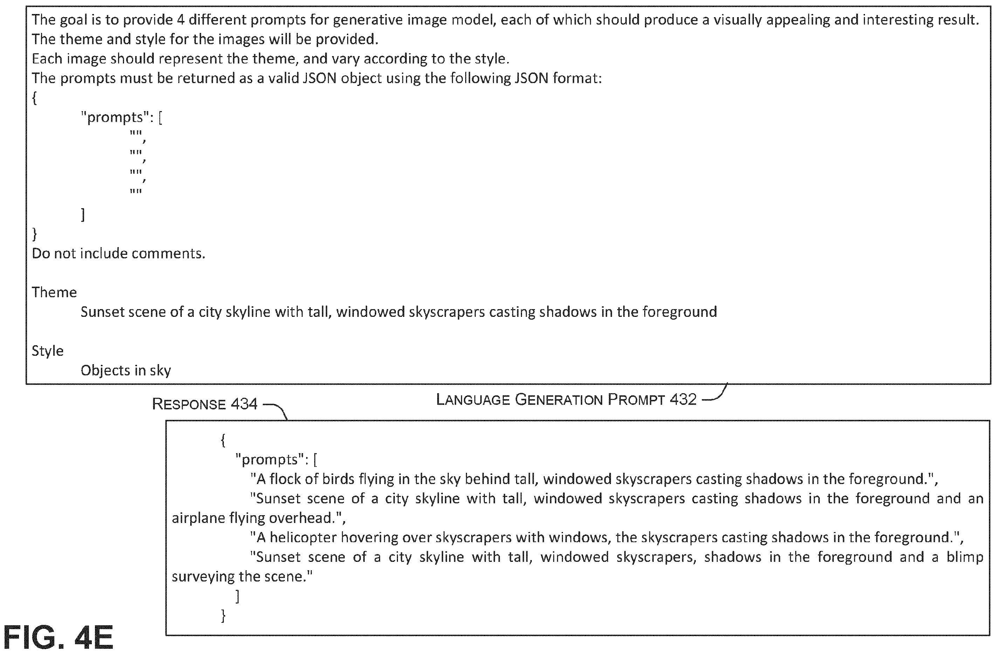

FIG. 4E shows a language generation prompt 432 that can be input to the generative language model 100. Language generation prompt 432 includes, as a theme, the image generation prompt that was used to generate selected image 412 - "Sunset scene of a city skyline with tall, windowed skyscrapers casting shadows in the foreground." The prompt also includes a style obtained from the user input to generative container 421, "Objects in sky." Said another way, the language generation prompt requests refinement of the image generation prompt used to generate the selected image 412, based on the additional user input requesting to add objects in the sky. The response 434 generated by the generative language model 100 includes four image generation prompts. These four image generation prompts can be input to generative image model 200, which then outputs the four new images shown in generative container 421.

### EXAMPLE USER EXPERIENCE - FOREST BRANCH, SINGLE ITERATION

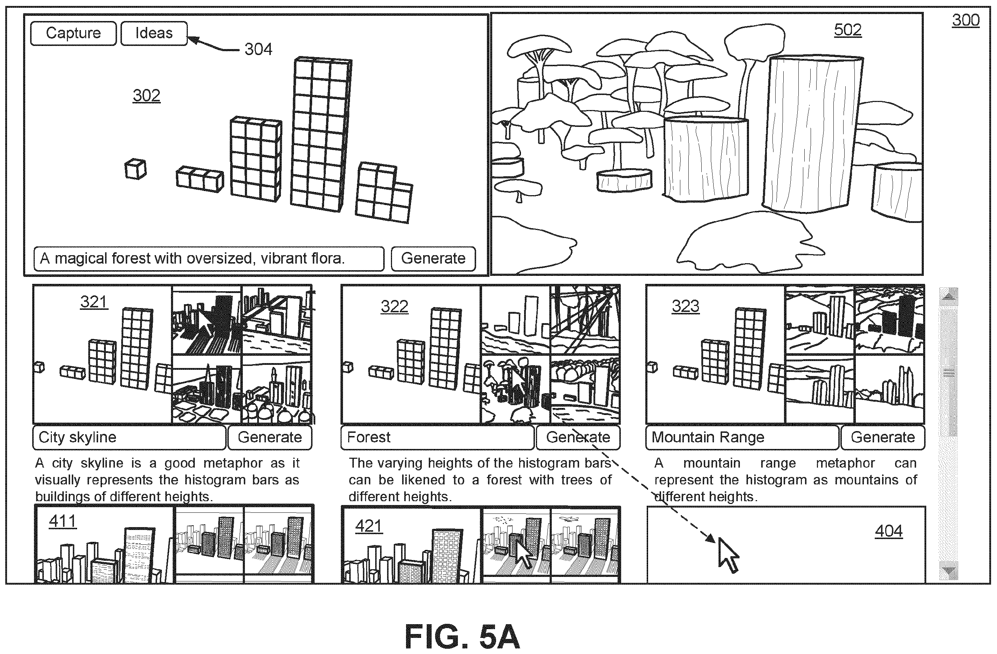

Next, assume the user decides they would like to further explore the forest metaphor represented by the set of images in generative container 322. As shown in FIG. 5A, the user can choose a selected image 502 from generative container 322 and drag the selected image to the new container area 404.

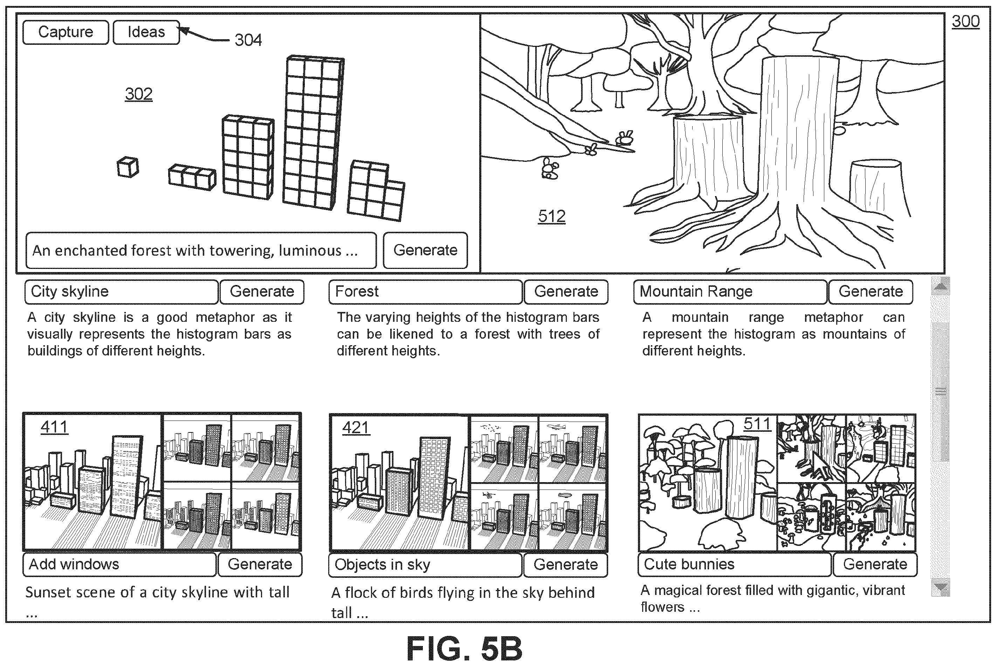

After the selected image 502 is dragged to the new container area, a generative container 511 is created, as shown in FIG. 5B. The user can enter the text "Cute Bunnies" into the new generative container. This can trigger generation of new images based on the selected image 512 and the text. As shown in FIG. 5B, four new images are generated based on the forest metaphor and added to generative container 511, but now the images can include bunnies.

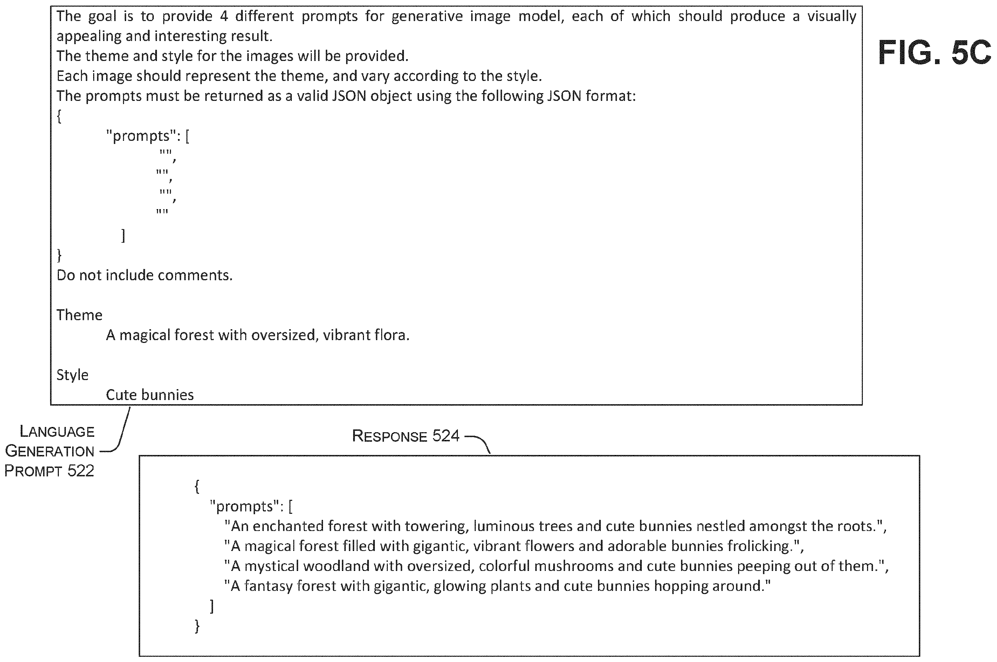

FIG. 5C shows a language generation prompt 522 that can be input to the generative language model 100. Language generation prompt 522 includes, as a theme, the image generation prompt that was used to generate selected image 402 - "A magical forest with oversized, vibrant flora." The language generation prompt also includes a style obtained from the user input to generative container 511, "Cute Bunnies." Said another way, the language generation prompt requests refinement of the image generation prompt used to generate the selected image 502, based on the additional user input requesting to add the bunnies. The response 524 generated by the generative language model 100 includes four image generation prompts. These four image generation prompts can be input to generative image model 200, which then outputs the four new images shown in generative container 511.

### EXAMPLE DATA STRUCTURE

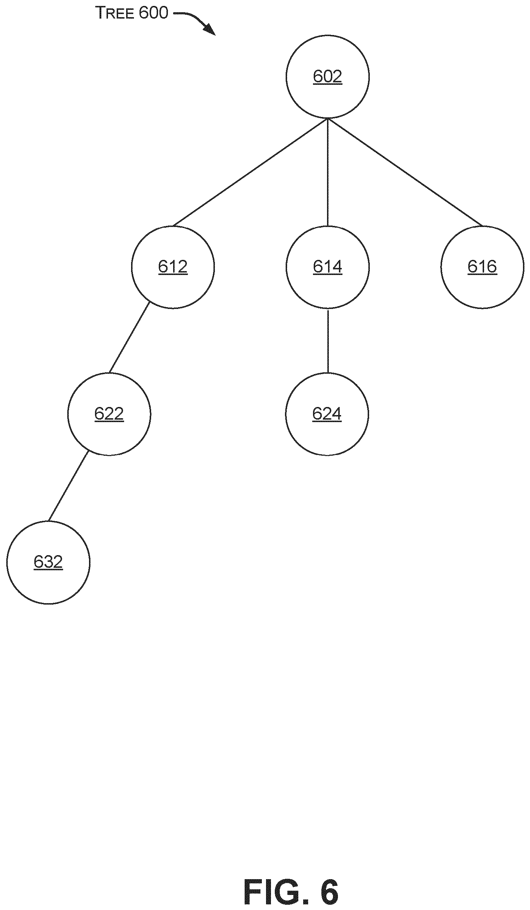

The previous example introduced how multiple content-generating iterations with associated prompt refinement can be implemented using generative containers. In some implementations, a data structure can be stored that represents each generative container based on its relationship to other containers. For instance, FIG. 6 shows a tree 600, which is one example of such a data structure. Root node 602 can represent an initial user input, e.g., user-identified image 302. Root node 602 can also represent any additional context associated with the user input, such as the image metadata mentioned above. In addition, initial language generation prompt 310 and initial response 320 can be included as part of root node 602.

Node 612 represents generative container 321 with the initial set of city skyline images. Node 612 can include the four prompts to the generative image model 200 that were used to generate the images in that generative container, as well as the images themselves. Node 622 represents generative container 411 with the city skyline images with added windows. Node 622 can include the four prompts to the generative image model 200 that were used to generate the images in that generative container, as well as the images themselves and the user input used to generate that container (e.g., the requested refinement and image selected from the parent container). Node 632 represents generative container 421 with the city skyline images with added windows and objects in the sky. Node 632 can include the four prompts to the generative image model 200 that were used to generate the images in that generative container, the images themselves, and the user input used to generate that container.

Node 614 represents generative container 322 with the initial set of forest images. Node 614 can include the four prompts to the generative image model 200 that were used to generate the images in that generative container, the images themselves, and the user input used to generate that container. Node 624 represents generative container 511 with the images of the bunnies added to the forest scene. Node 624 can include the four prompts to the generative image model 200 that were used to generate the images in that generative container, the images themselves, and the user input used to generate that container.

Node 616 represents generative container 323 with the initial set of city skyline images. Node 616 can include the four prompts to the generative image model 200 that were used to generate the images in that container, the images themselves, and the user input used to generate that container.

In this manner, tree 600 is used as a data structure to store information about the generative containers, and the tree provides a representation of how the user iterated through the generative containers. Thus, it is possible to determine how individual branches of generative containers were explored at each iteration, as well as how prompt refinement was implemented at each iteration. Note also that tree 600 can be used to generate the user interface 300.

In some implementations, the tree can also be shown on a user interface. For instance, tree 600 can be displayed to the user. If the user clicks on a given node of the tree, the images, user inputs, and/or prompts associated with that iteration can be displayed to the user. In other iterations, the containers themselves can be directly displayed in tree form (e.g., as thumbnails). In still further implementations, users can select leaf or internal nodes of the tree, provide new input to the corresponding generative container represented by that node of the tree, and re-generate the subtree of that node.

### EXAMPLE METHOD

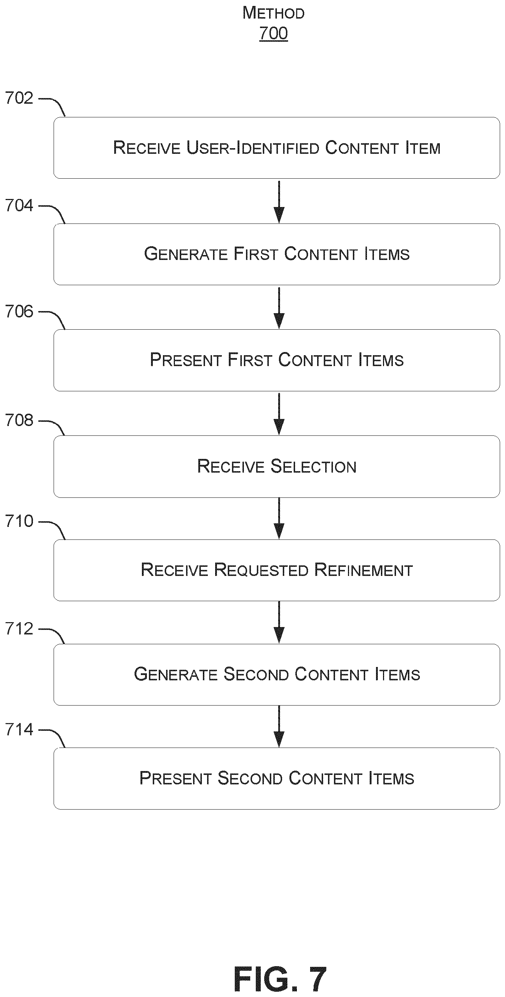

FIG. 7 illustrates an example computer-implemented method 700, consistent with some implementations of the present concepts. Method 700 can be implemented on many different types of devices, e.g., by one or more cloud servers, by a client device such as a laptop, tablet, or smartphone, or by combinations of one or more servers, client devices, etc.

Method 700 begins at block 702, where a user-identified content item is received. For instance, the user input can identify an image, such as user-identified image 302. In other implementations, the user input can select other types of data, such as text, video, or audio data. Block 702 can also include obtaining metadata or other context associated with the user-identified content item.

Method 700 continues at block 704, where first content items are generated. For instance, as described above, the first content items can be images generated using both a generative language model and a generative image model. In other cases, the first content items can be other types of data. The first content items can be generated by prompting one or more generative models to create the first content items.

Method 700 continues at block 706, where the first content items are presented in first generative containers. For instance, as described above, the generative containers can include groups of generated content items that were generated together and have some logical relationship. In the examples above, generated content items associated with a particular metaphor were grouped together in one container, as were generated content items that were generated in the same iteration based on a requested refinement.

Method 700 continues at block 708, where a user selection of a selected content item is received. For instance, as described above, users can select a content item by movement of (e.g., by dragging and dropping, copying and pasting, etc.) the content item into a new generative container area. Users can also select content items using mouse clicks, touch inputs, video game controllers, voice, eye gaze tracking, or other techniques.

Method 700 continues at block 710, where a requested refinement to the selected content item is received. For instance, as noted above, users may enter text into a selective generative container that includes the selected content item and request generation of new content items based on the refinement.

Method 700 continues at block 712, where second content items are generated. For instance, the second content items can be generated by refining a prompt used to generate the selected first content item. As noted above, one way to refine the prompt involves requesting a generative language model to refine the prompt based on the requested refinement received at block 710.

Method 700 continues at block 714, where the second content items are presented in one or more second generative containers. As noted above, users can continue refining the second content items for subsequent iterations. In each iteration, a user interface and data structure can be updated to reflect the new iteration. Alternatively, users can accept a particular generated content item at any time, and method 700 can conclude.

### EXAMPLE SYSTEM

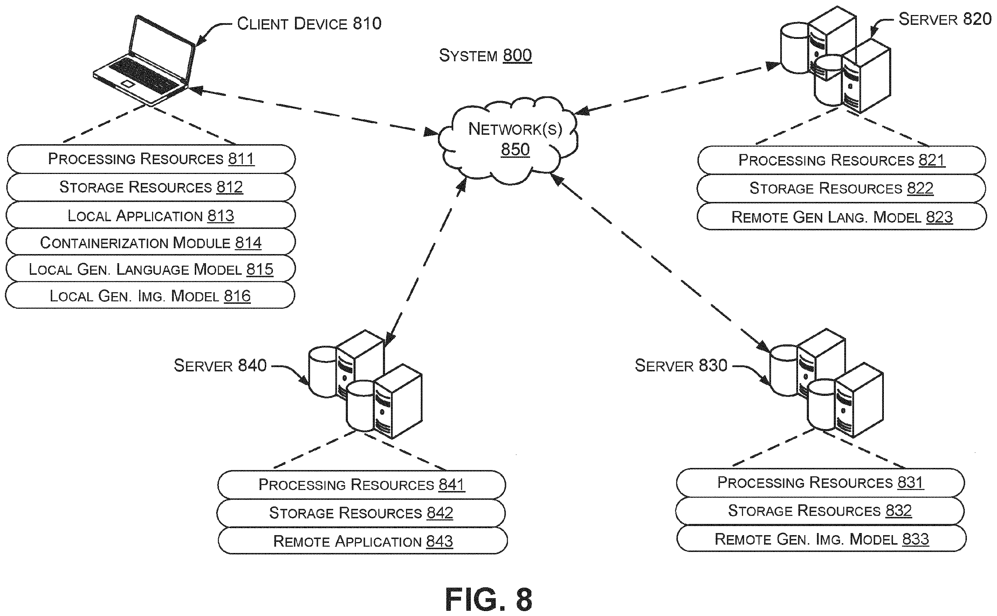

The present implementations can be performed in various scenarios on various devices. FIG. 8 shows an example system 800 in which the present implementations can be employed, as discussed more below.

As shown in FIG. 8, system 800 includes a client device 810, a server 820, a server 830, and a server 840, connected by one or more network(s) 850. Note that the client device can be embodied both as a mobile device such as smart phones or tablets, as well as stationary devices such as desktops, server devices, etc. Likewise, the servers can be implemented using various types of computing devices. In some cases, any of the devices shown in FIG. 8, but particularly the servers, can be implemented in data centers, server farms, etc.

Client device 810 can have processing resources 811 and storage resources 812, server 820 can have processing resources 821 and storage resources 822, server 830 can have processing resources 831 and storage resources 832, and server 840 can have processing resources 841 and storage resources 842. Each of these devices may also have various modules that function using the processing and storage resources to perform the techniques discussed herein. The storage resources can include both persistent storage resources, such as magnetic or solid-state drives, and volatile storage, such as one or more random-access memory devices. In some cases, the modules are provided as executable instructions that are stored on persistent storage devices, loaded into the random-access memory devices, and read from the random-access memory by the processing resources for execution.

Client device 810 can include one or more local application(s) 813, such as an email client, web browser, word processing application, social media application, photo or video repository application, etc. The client device can also include a containerization module 814, which can coordinate generation of content items and present the generated content items in generative containers, e.g., by performing method 700. The client device can also include a local generative language model 815, e.g., a local instance of generative language model 100 as shown in FIG. 1. The client device can also include a local generative image model 816, e.g., a local instance of generative image model 200 as shown in FIG. 2.

Server 820 can host remote generative language model 823, e.g., a remote instance of generative language model 100 as shown in FIG. 1. Server 830 can host a remote generative language model 833, e.g., a remote instance of generative image model 200 as shown in FIG. 2. Server 840 can host remote application 843, which can also provide content items for user selection and input to one or more generative containers. Containerization module 814 on client device 810 can send prompts to remote generative models and receive generated content items from these remote generative models over network(s) 850 and can retrieve user-identified content items from server 840 over network(s) 850.

### ADDITIONAL IMPLEMENTATIONS

The examples illustrated above are just a few plausible examples of how generative machine learning actions can be flexibly identified and integrated into generative containers. For instance, while the above examples described implementations where the generated content included images, it is also feasible to use other types of data, such as text.

For instance, consider a user who wishes to write an email asking for time off of work. The user-identified content item in this case could be a short snippet, such as "I want next week off." The metadata could include information identifying the recipient of the email. In an initial content-generation iteration, two generative containers could be generated - a first generative container with several formal emails and a second generative container with several casual emails. Next, the user could select one of the casual emails and then ask for that email to be lengthened. Then, a third generative container could be generated by refining a prompt used to generate the selected casual second email from the second container. Then the user could select one of the lengthened emails from the third generative container to send to the recipient.

As another example, some implementations can facilitate allowing users to select portions of generated content items to refine in further containers. In the email example above, the user could select a specific sentence of a first generated email and ask that the sentence be expanded in a subsequent iteration. Then, a new generative container could be displayed, where the new generative container includes several newly-generated second emails where the selected sentence of the first email is replaced by several newly-generated sentences, but the rest of the first email remains unchanged.

Portions of user images or generated images can also be modified. For instance, a user can select a specific portion of a user image or generated image, e.g., using a stylus, mouse, or touch input to draw a boundary around the portion of the image that they wish to modify. Then, a generative image model can inpaint the selected area. As additional examples, user images can be outpainted or restyled by a generative image model. In this manner, users can iteratively refine generated images by retaining portions of the generated images that they want to keep, while requesting regeneration of other portions of the images until a final generated image is accepted by the user. As another example, three-dimensional image/video generation can be conditioned on a three-dimensional mesh input to a generative image model, where the image model can vary the viewpoint when generating different images/videos.

As a further example, some implementations can employ video generation. For instance, a first generation step could generate a total of twelve videos, with four videos in each of three generative containers. Then, the user could scroll through a selected first video from one of the generative containers and select a particular frame from which they wish for further changes to begin. Then, the next generative iteration could modify the selected first video from the selected frame onward based on further user input and present newly-generated videos in a new generative container. In some implementations, the user can select a span of video, e.g., a starting frame and an ending frame, and the selected span of video can be replaced with newly-generated content in the next generation iteration without modifying the portions of the video that occur before and after the starting frame.

As also noted previously, multi-modal models can be employed. For instance, a vision transformer or CLIP model could be employed where a user can use a keyword rather than a bounding box to select a particular object that they want to modify. In other words, the user could say "make the dog smaller" rather than selecting the dog with a mouse or stylus. As another example, a multi-modal model with both image and language generation capabilities could generate images as a single step using a single prompt, instead of first using a generative language model to generate prompts for a generative image model as described previously. In cases where three-dimensional videos are generated, directional audio can be generated for sound sources in the video, and the audio can be refined in each generation step based on user input.

In further implementations, content generation can be conditioned on various types of context. For instance, user characteristics such as age, location, or historical preferences can be tracked and provided to a generative model at each generation step. Another type of context involves device type, e.g., the type of device a user is currently employing could be input to a generative model. Thus, for instance, a generative image model might generate two-dimensional video/audio for a laptop or mobile phone, and three-dimensional video/audio for a virtual- or augmented-reality headset. The generated video/audio could be interactive, e.g., change in response to user inputs and/or external signals.

In addition, each generation step could involve generation of multiple types of content. For instance, a generation step could generate an image with a paragraph describing the image, a video with accompanying generated audio, etc. Users can flexibly decide which content to retain and which content to refine at each iteration.

### TECHNICAL EFFECT

As noted previously, generative machine learning has not been widely integrated into everyday computing devices. Thus, rudimentary human-computer interaction techniques tend to predominate, e.g., by having users manually enter prompts to a generative machine learning model and then sequentially displaying the prompts followed by responses generated by the model. Refinement of a previous prompt tends to involve the user copying that prompt and then manually editing the prompt.

The disclosed implementations provide a graphical user interface and associated processing that guide prompt refinement in an automated fashion. When user input is received that selects a particular content item and a requested refinement to that content item, the prompt that was used to generate that content item is automatically refined to obtain a new prompt for a subsequent iteration of content generation. Moreover, because the refined prompt can be produced using a generative model, the user input can involve relatively few keystrokes compared to directly editing the prompt being refined.

Furthermore, the disclosed implementations can display generative content in a graphical user interface in a manner that conveys the generated content items in logical groupings. Because each set of content items that is generated in a given iteration is organized into respective generative containers, user input directed to a particular generative container is employed to automatically refine prompts that are logically related to those content items. For instance, as described above, user input directed to a generative container with city skyline scenes is used to automatically refine a particular prompt that was used to generate a city skyline image, and user input directed to a generative container with forest scenes is used to automatically refine a particular prompt that was used to generate forest image. More generally, user mouse or touch inputs can be employed to select generated content for refinement, rather than directly editing the prompts themselves.

### DEVICE IMPLEMENTATIONS

As noted above with respect to FIG. 8, system 800 includes several devices, including a client device 810, a server 820, a server 830, and a server 840. As also noted, not all device implementations can be illustrated, and other device implementations should be apparent to the skilled artisan from the description above and below.

The term "device", "computer," "computing device," "client device," and or "server device" as used herein can mean any type of device that has some amount of hardware processing capability and/or hardware storage/memory capability. Processing capability can be provided by one or more hardware processors (e.g., hardware processing units/cores) that can execute computer-readable instructions, which, when executed, cause the hardware processors to provide functionality. Computer-readable instructions and/or data can be stored on storage, such as storage/memory and or the datastore. The term "system" as used herein can refer to a single device, multiple devices, etc.

Storage resources can be internal or external to the respective devices with which they are associated. The storage resources can include any one or more of volatile or non-volatile memory, hard drives, flash storage devices, and/or optical storage devices (e.g., CDs, DVDs, etc.), among others. As used herein, the term "computer-readable medium" can include signals. In contrast, the term "computer-readable storage medium" excludes signals. Computer-readable storage media includes "computer-readable storage devices." Examples of computer-readable storage devices include volatile storage media, such as RAM, and non-volatile storage media, such as hard drives, optical discs, and flash memory, among others.

In some cases, the devices are configured with a general-purpose hardware processor and storage resources. Processors and storage can be implemented as separate components or integrated together as in computational RAM. In other cases, a device can include a system on a chip (SOC) type design. In SOC design implementations, functionality provided by the device can be integrated on a single SOC or multiple coupled SOCs. One or more associated processors can be configured to coordinate with shared resources, such as memory, storage, etc., and/or one or more dedicated resources, such as hardware blocks configured to perform certain specific functionality. Thus, the term "processor," "hardware processor" or "hardware processing unit" as used herein can also refer to central processing units (CPUs), graphical processing units (GPUs), controllers, microcontrollers, processor cores, or other types of processing devices suitable for implementation both in conventional computing architectures as well as SOC designs.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In some configurations, any of the modules/code discussed herein can be implemented in software, hardware, and/or firmware. In any case, the modules/code can be provided during manufacture of the device or by an intermediary that prepares the device for sale to the end user. In other instances, the end user may install these modules/code later, such as by downloading executable code and installing the executable code on the corresponding device.

Also note that devices generally can have input and/or output functionality. For example, computing devices can have various input mechanisms such as keyboards, mice, touchpads, voice recognition, gesture recognition (e.g., using depth cameras such as stereoscopic or time-of-flight camera systems, infrared camera systems, RGB camera systems or using accelerometers/gyroscopes, facial recognition, etc.), microphones, etc. Devices can also have various output mechanisms such as printers, monitors, speakers, etc.

Also note that the devices described herein can function in a stand-alone or cooperative manner to implement the described techniques. For example, the methods and functionality described herein can be performed on a single computing device and/or distributed across multiple computing devices that communicate over network(s) 850. Without limitation, network(s) 850 can include one or more local area networks (LANs), wide area networks (WANs), the Internet, and the like.

Various examples are described above. Additional examples are described below. One example includes a computer-implemented method comprising receiving a user-identified content item, based on the user-identified content item, generating first content items using one or more generative models, presenting the first content items in one or more first generative containers, receiving a user selection of a selected first content item from a selected first generative container, receiving a requested refinement to the selected first content item, based on the selected first content item and the requested refinement, generating second content items using the one or more generative models, and presenting the second content items in one or more second generative containers.

Another example can include any of the above and/or below examples where the generating the second content items comprises refining a prompt used to generate the selected first content item based on the requested refinement to obtain a refined prompt and inputting the refined prompt to the one or more generative models.

Another example can include any of the above and/or below examples where the one or more generative models comprise a generative image model, the user-identified content item comprises a user-identified image, the first content items comprise first images, the second content items comprise second images, and the selected first content item comprises a selected first image.

Another example can include any of the above and/or below examples where the computer-implemented method further comprises obtaining image metadata relating to the user-identified image, generating first image generation prompts based on the image metadata, and inputting the first image generation prompts to the generative image model, the generative image model generating the first images based on the first image generation prompts.

Another example can include any of the above and/or below examples where the one or more generative models comprise a generative language model, the computer-implemented method further comprising generating a first language generation prompt based on the image metadata and inputting the first language generation prompt to the generative language model, the generative language model outputting the first image generation prompts in response to the first language generation prompt.

Another example can include any of the above and/or below examples where the computer-implemented method further comprises identifying a selected first image generation prompt that was used to generate the selected first image, generating a second language generation prompt based on the selected first image generation prompt and the requested refinement, and inputting the second language generation prompt to the generative language model.

Another example can include any of the above and/or below examples where the computer-implemented method further comprises receiving second image generation prompts from the generative language model in response to the second language generation prompt, and inputting the second image generation prompts to the generative image model, the generative image model generating the second images based on the second image generation prompts.

Another example can include any of the above and/or below examples where the computer-implemented method further comprises constraining the generative image model based on a depth map obtained from the user-identified image.

Another example can include any of the above and/or below examples where the computer-implemented method further comprises comprising prompting the generative image model by at least one of the first image generation prompts or the second image generation prompts to inpaint part of the user-identified image, outpaint the user-identified image, or restyle the user-identified image.

Another example can include any of the above and/or below examples where the generative language model and the generative image model are implemented as a multi-modal generative model.

Another example can include any of the above and/or below examples where the generative language model and the generative image model are separate models.

Another example can include a system comprising a processor and a storage medium storing instructions which, when executed by the processor, cause the system to receive a user-identified content item, based on the user-identified content item, generate first content items using one or more generative models, present the first content items in one or more first generative containers, receive a user selection of a selected first content item from a selected first generative container, receive a requested refinement to the selected first content item, based on the selected first content item and the requested refinement, generate second content items using the one or more generative models, and present the second content items in one or more second generative containers.

Another example can include any of the above and/or below examples where the instructions, when executed by the processor, cause the system to display the one or more first generative containers and the one or more second generative containers on a user interface comprising a new container area.

Another example can include any of the above and/or below examples where the user selection of the selected first content item comprises a movement of the selected first content item from a selected first generative container to the new container area, the one or more second generative containers being generated in response to the movement.

Another example can include any of the above and/or below examples where the instructions, when executed by the processor, cause the system to receive the requested refinement via the one or more second generative containers.

Another example can include any of the above and/or below examples where at least some of the first content items and at least some of the second content items comprise natural language content items.

Another example can include any of the above and/or below examples where at least some of the first content items and at least some of the second content items comprise video content items or audio content items.

Another example can include any of the above and/or below examples where the instructions, when executed by the processor, cause the system to receive a user selection of a portion of the selected first content item, and prompt the one or more generative models to generate the second content items by modifying the selected portion of the selected first content item.

Another example can include any of the above and/or below examples where the instructions, when executed by the processor, cause the system to store a tree data structure having nodes representing the containers, each node having one or more corresponding prompts and associated context.

Another example can include a computer-readable storage medium storing instructions which, when executed by a processing device, cause the processing device to perform acts comprising receiving a user-identified content item, based on the user-identified content item, generating first content items using one or more generative models, presenting the first content items in one or more first generative containers, receiving a user selection of a selected first content item from a selected first generative container, receiving a requested refinement to the selected first content item, based on the selected first content item and the requested refinement, generating second content items using the one or more generative models, and presenting the second content items in one or more second generative containers.

A further example relates to generative machine learning. Users can provide a selected content item, such as an image, video, or text. Then, generative content items can be generated based on the selected content item and presented in generative containers on a graphical user interface. Users can iteratively refine the generated content items by selecting generated content items from the user interface and requesting refinements to the selected content items. Based on the requested refinements, a new set of generated content items can be generated and displayed to the user. The iterative refinement process can continue until the user decides to end the process, e.g., by accepting a final generated content item.

### CONCLUSION

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

## Claims

1. A computer-implemented method (700) comprising:
receiving (702) a user-identified content item;
based on the user-identified content item, generating (704) first content items using one or more generative models;
presenting (706) the first content items in one or more first generative containers;
receiving (708) a user selection of a selected first content item from a selected first generative container;
receiving (710) a requested refinement to the selected first content item;
based on the selected first content item and the requested refinement, generating (712) second content items using the one or more generative models; and
presenting (714) the second content items in one or more second generative containers.

2. The computer-implemented method of claim 1, wherein the generating the second content items comprises:
refining a prompt used to generate the selected first content item based on the requested refinement to obtain a refined prompt; and
inputting the refined prompt to the one or more generative models.

3. The computer-implemented method of claim 1 or claim 2, wherein the one or more generative models comprise a generative image model, the user-identified content item comprises a user-identified image, the first content items comprise first images, the second content items comprise second images, and the selected first content item comprises a selected first image.

4. The computer-implemented method of claim 3, further comprising:
obtaining image metadata relating to the user-identified image;
generating first image generation prompts based on the image metadata; and
inputting the first image generation prompts to the generative image model, the generative image model generating the first images based on the first image generation prompts.

5. The computer-implemented method of claim 4, wherein the one or more generative models comprise a generative language model, the computer-implemented method further comprising:
generating a first language generation prompt based on the image metadata; and
inputting the first language generation prompt to the generative language model, the generative language model outputting the first image generation prompts in response to the first language generation prompt.

6. The computer-implemented method of claim 5, further comprising:
identifying a selected first image generation prompt that was used to generate the selected first image;
generating a second language generation prompt based on the selected first image generation prompt and the requested refinement; and
inputting the second language generation prompt to the generative language model.

7. The computer-implemented method of claim 6, further comprising:
receiving second image generation prompts from the generative language model in response to the second language generation prompt; and
inputting the second image generation prompts to the generative image model, the generative image model generating the second images based on the second image generation prompts.

8. The computer-implemented method of claim 7, further comprising at least one of:
constraining the generative image model based on a depth map obtained from the user-identified image; and
prompting the generative image model by at least one of the first image generation prompts or the second image generation prompts to inpaint part of the user-identified image, outpaint the user-identified image, or restyle the user-identified image.

9. The computer-implemented method of claim 7, wherein either:
the generative language model and the generative image model are implemented as a multi-modal generative model; or
the generative language model and the generative image model are separate models.

10. A system (800, 810) comprising:
a processor (811); and
a storage medium (812) storing instructions which, when executed by the processor, cause the system to:
receive (702) a user-identified content item;
based on the user-identified content item, generate (704) first content items using one or more generative models;
present (706) the first content items in one or more first generative containers;
receive (708) a user selection of a selected first content item from a selected first generative container;
receive (710) a requested refinement to the selected first content item;
based on the selected first content item and the requested refinement, generate (712) second content items using the one or more generative models; and
present (714) the second content items in one or more second generative containers.

11. The system of claim 10, wherein the instructions, when executed by the processor, cause the system to at least one of:
display the one or more first generative containers and the one or more second generative containers on a user interface comprising a new container area; and
receive the requested refinement via the one or more second generative containers.

12. The system of claim 11, wherein the user selection of the selected first content item comprises a movement of the selected first content item from a selected first generative container to the new container area, the one or more second generative containers being generated in response to the movement.

13. The system of claim 10, wherein at least some of the first content items and at least some of the second content items comprise at least one of:
natural language content items; and
video content items or audio content items.

14. The system of claim 10, wherein the instructions, when executed by the processor, cause the system to at least one of:
receive a user selection of a portion of the selected first content item, and prompt the one or more generative models to generate the second content items by modifying the selected portion of the selected first content item; and
store a tree data structure having nodes representing the containers, each node having one or more corresponding prompts and associated context.

15. A computer-readable storage medium storing instructions which, when executed by a processing device, cause the processing device to perform acts comprising:
receiving (702) a user-identified content item;
based on the user-identified content item, generating (704) first content items using one or more generative models;
presenting (706) the first content items in one or more first generative containers;
receiving (708) a user selection of a selected first content item from a selected first generative container;
receiving (710) a requested refinement to the selected first content item;
based on the selected first content item and the requested refinement, generating (712) second content items using the one or more generative models; and
presenting (714) the second content items in one or more second generative containers.
